(19)

Europäisches
Patentamt
European
Patent Office
Office européen
des brevets

(11) **EP 4 250 401 A1**

(12) **EUROPEAN PATENT APPLICATION**
published in accordance with Art. 153(4) EPC

(43) Date of publication:
**27.09.2023 Bulletin 2023/39**

(21) Application number: **21946248.8**

(22) Date of filing: **27.10.2021**

(51) International Patent Classification (IPC):
**H01M 4/505** (2010.01)  **H01M 4/525** (2010.01)

(52) Cooperative Patent Classification (CPC):
**C01G 53/54; C01G 53/00; C01G 53/50;**
**H01M 4/131; H01M 4/36; H01M 4/364;**
**H01M 4/366; H01M 4/485; H01M 4/505;**
**H01M 4/525; H01M 4/62; H01M 10/052;**
**H01M 10/0525;** H01M 2004/021; H01M 2004/028;

(Cont.)

(86) International application number:
**PCT/CN2021/126698**

(87) International publication number:
**WO 2023/070368 (04.05.2023 Gazette 2023/18)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Contemporary Amperex Technology**
**Co., Limited**
**Ningde, Fujian 352100 (CN)**

(72) Inventors:
• **ZHANG, Zhenguo**
  **Fujian 352100 (CN)**
• **WANG, Sihui**
  **Fujian 352100 (CN)**

(74) Representative: **Ziebig Hengelhaupt Intellectual**
**Property Attorneys**
**Patentanwaltsanwaltskanzlei PartGmbB**
**Leipziger Straße 49**
**10117 Berlin (DE)**

(54) **LITHIUM-NICKEL-MANGANESE-BASED COMPOSITE OXIDE MATERIAL, SECONDARY BATTERY, AND ELECTRICAL DEVICE**

(57)    This application provides a lithium-nickel-manganese-based composite oxide material, where a K value of the lithium-nickel-manganese-based composite oxide material ranges from 1 to 2, and the K value is calculated based on the following formula: $K = D_v50/d_v50$, where $d_v50$ is a volume median crystallite diameter of crystal particles of the lithium-nickel-manganese-based composite oxide material; and $D_v50$ is a volume median particle diameter of the lithium-nickel-manganese-based composite oxide material.

FIG. 1

EP 4 250 401 A1

(52) Cooperative Patent Classification (CPC): (Cont.)
Y02E 60/10

**Description**

**TECHNICAL FIELD**

This application relates to the technical field of secondary batteries, and in particular, to a lithium-nickel-manganese-based composite oxide material, a secondary battery, and an electric apparatus.

**BACKGROUND**

In recent years, secondary batteries have been widely used in energy storage power supply systems such as water power stations, thermal power stations, wind power stations, and solar power stations, and in a plurality of fields such as electric tools, electric bicycles, electric motorcycles, electric vehicles, military equipment, and aerospace.
Due to great development of the secondary batteries, higher requirements are imposed on energy density, cycling performance, safety performance, and the like of the secondary batteries.

**SUMMARY**

A purpose of this application is to provide a lithium-nickel-manganese-based composite oxide material. When the material is used as a positive electrode active material for a secondary battery (for example, a lithium-ion battery), the battery may show one or more types of improved performance selected from, for example, the following:

(i) improved cycling performance;
(ii) reduced ion leaching; and
(iii) reduced gassing.

To achieve the foregoing purpose, this application provides a lithium-nickel-manganese-based composite oxide material (lithium nickel-manganese-based composite oxide material), a K value of the lithium-nickel-manganese-based composite oxide material ranges from 1 to 2 (for example, from 1 to 1.1, from 1.1 to 1.2, from 1.2 to 1.3, from 1.3 to 1.4, from 1.4 to 1.5, from 1.5 to 1.6, from 1.6 to 1.7, from 1.7 to 1.8, from 1.8 to 1.9, or from 1.9 to 2), and the K value is calculated based on the following formula: $K = D_v50/d_v50$, where $d_v50$ is a volume median crystallite diameter (Volume median crystallite diameter) of crystal particles of the lithium-nickel-manganese-based composite oxide material, and $D_v50$ is the volume median particle diameter (Volume median particle diameter) of the lithium-nickel-manganese-based composite oxide material.
Therefore, if the K value of the lithium-nickel-manganese-based composite oxide material in this application falls within 1 to 2 after adjustment, when the lithium-nickel-manganese-based composite oxide material is used as a positive electrode active material for a secondary battery (for example, a lithium-ion battery), the battery shows one or more types of improved performance selected from, for example, the following:

(i) improved cycling performance;
(ii) reduced ion leaching; and
(iii) reduced gassing.

In any embodiment, the volume median crystallite diameter $d_v50$ of the crystal particles of the lithium-nickel-manganese-based composite oxide material ranges from 5 μm to 15 μm, or optionally, 5.5 μm to 11 μm. When the lithium-nickel-manganese-based composite oxide material is used as a positive electrode active material for a secondary battery (for example, a lithium-ion battery), the battery shows one or more types of improved performance.
In any embodiment, the volume median particle diameter $D_v50$ of the lithium-nickel-manganese-based composite oxide material ranges from 9 μm to 20 μm, or optionally, 9 μm to 11 μm. When the lithium-nickel-manganese-based composite oxide material is used as a positive electrode active material for a secondary battery (for example, a lithium-ion battery), the battery shows one or more types of improved performance.
In any embodiment, the lithium-nickel-manganese-based composite oxide material includes lithium-nickel-manganese-based composite oxide with a space group $P4_332$ and lithium-nickel-manganese-based composite oxide with a space group Fd-3m; and a percentage of the lithium-nickel-manganese-based composite oxide with the space group $P4_332$ is greater than a percentage of the lithium-nickel-manganese-based composite oxide with the space group Fd-3m.
In any embodiment, a percentage by weight of the lithium-nickel-manganese-based composite oxide with the space group $P4_332$ in the lithium-nickel-manganese-based composite oxide material is greater than 50%, or optionally, ranges from 80% to 91%.

In any embodiment, the lithium-nickel-manganese-based composite oxide material includes $Mn^{3+}$, and a percentage by weight of $Mn^{3+}$ in the lithium-nickel-manganese-based composite oxide material is less than or equal to 5wt%, or optionally, ranges from 1.0wt% to 2.2wt%.

In any embodiment, a specific surface area of the lithium-nickel-manganese-based composite oxide material is less than 1 $m^2$/g, or optionally, ranges from 0.1 $m^2$/g to 0.9 $m^2$/g.

In any embodiment, a tap density of the lithium-nickel-manganese-based composite oxide material is greater than or equal to 1.9 $g/cm^3$, or optionally, ranges from 1.9 $g/cm^3$ to 3.0 $g/cm^3$.

In any embodiment, the lithium-nickel-manganese-based composite oxide material includes lithium-nickel-manganese-based composite oxide particles whose surfaces are at least partially provided with a coating layer;

optionally, a material of the coating layer includes at least one of aluminum oxide, titanium oxide, zirconium oxide, boron oxide, rare-earth oxide, lithium salt, phosphate, borate, and fluoride;
optionally, the coating layer includes a lithium fast-ion conductor layer; and
optionally, the coating layer has a multi-layer structure, and the coating layer includes the lithium fast-ion conductor layer on an inner side and an aluminum oxide layer on an outer side.

In any embodiment, the lithium fast-ion conductor is selected from oxide-based, phosphate-based, borate-based, sulfide-based, and LiPON-based inorganic materials with lithium ion conductivity.

In any embodiment, the lithium fast-ion conductor includes one or more of the following elements: phosphorus, titanium, zirconium, boron, and lithium.

In any embodiment, the lithium fast-ion conductor is selected from $Li_2BO_3$, $Li_3PO_4$, or a combination thereof.

In any embodiment, a general formula of the lithium-nickel-manganese-based composite oxide material is Formula I:

$$Li_aNi_{0.5-x}Mn_{1.5-y}M_{x+y}O_{4-z}X_z \qquad \text{Formula I}$$

where in Formula I, an element M is selected from Ti, Zr, W, Nb, Al, Mg, P, Mo, V, Cr, Zn, or a combination thereof;
in Formula I, an element X is selected from F, Cl, I, or a combination thereof;
in Formula I, $0.9 \leq a \leq 1.1$, $-0.2 \leq x \leq 0.2$, $-0.2 \leq y \leq 0.3$, and $0 \leq z \leq 1$;
optionally, the element M is selected from Mg, Ti, or a combination thereof; and
optionally, the element X is F.

According to a second aspect of this application, a method for preparing lithium-nickel-manganese-based composite oxide material is provided, including:

providing a precursor composition, where the precursor includes a lithium source, a nickel source, and a manganese source; and
sintering the precursor composition to obtain the lithium-nickel-manganese-based composite oxide material, where a K value of a lithium-nickel-manganese-based composite oxide material ranges from 1 to 2, and the K value is calculated through the following formula:

$$K = D_v50/d_v50$$

where $d_v50$ is a volume median crystallite diameter of crystal particles of the lithium-nickel-manganese-based composite oxide material; and
$D_v50$ is a volume median particle diameter of the lithium-nickel-manganese-based composite oxide material.

In any embodiment, a general formula of the lithium-nickel-manganese-based composite oxide material is Formula I:

$$Li_aNi_{0.5-x}Mn_{1.5-y}M_{x+y}O_{4-z}X_z \qquad \text{Formula I}$$

where in Formula I, an element M is selected from Ti, Zr, W, Nb, Al, Mg, P, Mo, V, Cr, Zn, or a combination thereof;
in Formula I, an element X is selected from F, Cl, I, or a combination thereof; and
in Formula I, $0.9 \leq a \leq 1.1$, $-0.2 \leq x \leq 0.2$ (for example, $0 \leq x \leq 0.2$), $-0.2 \leq y \leq 0.3$ (for example, $0 \leq y \leq 0.3$), and $0 \leq z \leq 1$.

In any embodiment, the method satisfies one or more of the following:

(i) a ratio of a volume median particle diameter of the nickel source to a volume median particle diameter of the lithium-nickel-manganese-based composite oxide material ranges from 0.4 to 1;

(ii) a ratio of a volume median particle diameter of the manganese source to a volume median particle diameter of the lithium-nickel-manganese-based composite oxide material ranges from 0.4 to 1; and

(iii) a volume median particle diameter of the lithium source ranges from 1 $\mu$m to 20 $\mu$m (for example, 3 $\mu$m to 10 $\mu$m).

In any embodiment, the sintering includes a first heat treatment stage; and

a peak temperature at the first heat treatment stage ranges from 950°C to 1200°C, and a holding time of the peak temperature at the first heat treatment stage ranges from 5 hours to 30 hours.

In any embodiment, a heating rate to the peak temperature during the first heat treatment is less than or equal to 5°C/min, or optionally, ranges from 0.5°C/min to 3°C/min.

In any embodiment, the sintering further includes a second heat treatment stage after the first heat treatment stage; and

a peak temperature at the second heat treatment stage ranges from 550°C to 680°C, and a time at the second heat treatment stage ranges from 5 hours to 50 hours.

In any embodiment, the method further includes subjecting the precursor composition to ball milling before the sintering; and

optionally, a ball milling time is longer than 2 hours, for example, optionally, ranges from 2 hours to 6 hours.

According to a third aspect of this application, a secondary battery is provided, where the secondary battery includes a positive electrode plate, the positive electrode plate includes a positive electrode active material, and the positive electrode active material includes the lithium-nickel-manganese-based composite oxide material according to the first aspect of this application or the lithium-nickel-manganese-based composite oxide prepared in the method according to the second aspect of this application.

According to a fourth aspect of this application, an electric apparatus is provided, including the secondary battery according to the third aspect of this application.

## BRIEF DESCRIPTION OF DRAWINGS

FIG. 1 shows a scanning electron microscope photograph of a lithium-nickel-manganese-based composite oxide material in Example 2a.

FIG. 2 shows a scanning electron microscope photograph of a lithium-nickel-manganese-based composite oxide material in Example 2b.

FIG. 3 shows a scanning electron microscope photograph of a lithium-nickel-manganese-based composite oxide material in Example 2c.

FIG. 4 shows a scanning electron microscope photograph of a lithium-nickel-manganese-based composite oxide material in Example 3b.

FIG. 5 shows a scanning electron microscope photograph of a lithium-nickel-manganese-based composite oxide material in Comparative Example 1.

FIG. 6 shows a scanning electron microscope photograph of a lithium-nickel-manganese-based composite oxide material in Comparative Example 2.

FIG. 7 shows a scanning electron microscope photograph of a lithium-nickel-manganese-based composite oxide material in Comparative Example 3.

FIG. 8 is a schematic diagram of a secondary battery according to an embodiment of this application.

FIG. 9 is an exploded view of a secondary battery according to an embodiment of this application.

FIG. 10 is a schematic diagram of an electric apparatus using a secondary battery as a power source according to an embodiment of this application.

Reference signs are described as follows:

5 secondary battery; 51 housing; 52 electrode assembly; and 53 top cover assembly.

## DESCRIPTION OF EMBODIMENTS

Embodiments of a positive electrode active material and a method for manufacturing the same, a positive electrode plate, a negative electrode plate, a secondary battery, and an electric apparatus specifically disclosed in this application are described in detail below with reference to the accompanying drawings as appropriate. However, unnecessary detailed descriptions may be omitted. For example, detailed descriptions of a well-known matter or overlapping descriptions of an actual identical structure has been omitted. This is to avoid unnecessary cumbersomeness of the following descriptions, to facilitate understanding by persons skilled in the art. In addition, accompanying drawings and the following descriptions are provided for persons skilled in the art to fully understand this application and are not intended to limit the subject described in the claims.

"Ranges" disclosed in this application are defined in the form of lower and upper limits, given ranges are defined by selecting lower and upper limits, and the selected lower and upper limits define boundaries of special ranges. Ranges defined in the method may or may not include end values, and any combination may be used, that is, any lower limit may be combined with any upper limit to form a range. For example, if ranges of 60 to 120 and 80 to 110 are provided for a specific parameter, it should be understood that ranges of 60 to 110 and 80 to 120 are also predictable. In addition, if minimum values of a range are set to 1 and 2, and maximum values of the range are set to 3, 4, and 5, the following ranges are all predictable: 1 to 3, 1 to 4, 1 to 5, 2 to 3, 2 to 4, and 2 to 5. In this application, unless otherwise specified, a value range of "a to b" represents an abbreviated representation of any combination of real numbers between a and b, where both a and b are real numbers. For example, a value range of "0 to 5" means that all real numbers from "0 to 5" are listed herein, and "0-5" is just an abbreviated representation of a combination of these values. In addition, when a parameter is expressed as an integer greater than or equal to 2, this is equivalent to disclosure that the parameter is, for example, an integer: 2, 3, 4, 5, 6, 7, 8, 9, 10, 11, 12, or the like.

Unless otherwise specified, all the embodiments and optional embodiments of this application can be mutually combined to form a new technical solution.

Unless otherwise specified, all the technical features and optional technical features of this application can be mutually combined to form a new technical solution.

Unless otherwise specified, all the steps in this application can be performed sequentially or randomly, or preferably, are performed sequentially. For example, a method includes steps (a) and (b), which indicates that the method may include steps (a) and (b) performed sequentially, or may include steps (b) and (a) performed sequentially. For example, the foregoing method may further include a step (c), which indicates that a step (c) may be added to the method in any order, for example, the method may include steps (a), (b), and (c), steps (a), (c), and (b), steps (c), (a), and (b), or the like.

Unless otherwise specified, "include" and "contain" mentioned in this application is inclusive or may be exclusive. For example, terms "include" and "contain" can mean that other unlisted components may also be included or contained, or only listed components may be included or contained.

Unless otherwise specified, in this application, the term "or" is inclusive. For example, a phrase "A or B" means "A, B, or both A and B". More specifically, any of the following conditions satisfies the condition "A or B": A is true (or present) and B is false (or not present); A is false (or not present) and B is true (or present); or both A and B are true (or present).

[Secondary battery]

A secondary battery is alternatively referred to as a rechargeable battery or an accumulator, and is a battery that can be charged after being discharged to activate active materials for continuous use.

Usually, the secondary battery includes a positive electrode plate, a negative electrode plate, a separator, and an electrolyte. During charging and discharging of the battery, active ions (such as lithium ions) are intercalated and deintercalated back and forth between the positive electrode plate and the negative electrode plate. The separator is disposed between the positive electrode plate and the negative electrode plate to mainly prevent a short circuit between positive and negative electrodes and to allow the active ions to pass through. The electrolyte mainly conducts the active ions between the positive electrode plate and the negative electrode plate.

[Positive electrode plate]

The positive electrode plate usually includes a positive electrode current collector and a positive electrode film layer disposed on at least one surface of the positive electrode current collector, and the positive electrode film layer includes a positive electrode active material.

The positive electrode current collector includes two back-to-back surfaces in a thickness direction of the positive electrode current collector, and the positive electrode film layer is disposed on either or both of the two back-to-back surfaces of the positive electrode current collector.

The positive electrode active material in this application includes a lithium-nickel-manganese-based composite oxide material (lithium nickel-manganese-based composite oxide material), a K value of the lithium-nickel-manganese-based composite oxide material ranges from 1 to 2 (for example, from 1 to 1.1, from 1.1 to 1.2, from 1.2 to 1.3, from 1.3 to 1.4, from 1.4 to 1.5, from 1.5 to 1.6, from 1.6 to 1.7, from 1.7 to 1.8, from 1.8 to 1.9, or from 1.9 to 2), and the K value is calculated based on the following formula: $K = D_v50/d_v50$, where $d_v50$ is a volume median crystallite diameter (Volume median crystallite diameter) of crystal particles of the lithium-nickel-manganese-based composite oxide material, and $D_v50$ is the volume median particle diameter (Volume median particle diameter) of the lithium-nickel-manganese-based composite oxide material.

Although a mechanism is still unclear, the applicant unexpectedly finds that if the K value of the lithium-nickel-manganese-based composite oxide material in this application falls within 1 to 2 after adjustment, when the lithium-nickel-manganese-based composite oxide material is used as a positive electrode active material for a secondary battery (for example, a lithium-ion battery), the battery shows one or more types of improved performance selected from, for example, the following:

(i) improved cycling performance;
(ii) reduced ion leaching; and
(iii) reduced gassing.

The term "crystal particle" refers to a largest region in which atoms are regularly repeatedly arranged (allowing for a small number of atomic-scale point or line defects) in the material. An atomic arrangement at an interface between adjacent crystal particles is different from an atomic arrangement within the crystal particle. Atoms at the interface between the adjacent crystal particles continuously form a thin layer and penetrate a contact surface (crystal boundary) between the crystal particles. For example, in a field of view of a scanning electron microscope, regions of a nanometer or micrometer scale divided by clear interfaces inside particles are the crystal particles. Herein, an approximate diameter of the crystal particles is referred to as a crystallite diameter of the crystal particles. Morphology of the crystal particles can be observed under the scanning electron microscope.

The lithium-nickel-manganese-based composite oxide material includes a plurality of crystal particles (for example, single crystal particles or polycrystalline particles). The single crystal particle includes one crystal particle. The polycrystalline particle includes a plurality of crystal particles, and there is a crystal boundary between adjacent crystal particles.

The term "specific surface area" (also referred to as BET specific surface area) is obtained by measuring a specific surface area of a solid substance with reference to a GB/T 19587-2004 gas adsorption BET method.

The term "volume median particle diameter $D_v50$" is measured with reference to a GB/T 19077-2016 particle size analysis laser diffraction method. In terms of testing instrument, a Mastersizer 3000 laser particle size analyzer is used.

The term "volume median crystallite diameter of crystal particles" is obtained through testing by the following method: The lithium-nickel-manganese-based composite oxide material is observed with a scanning electron microscope (for example, a Zeiss Sigma 300 field emission scanning electron microscope); and in a process of photographing (or obtaining a photograph through photographing), 5 regions are randomly selected, the maximum particle diameter $d_{max}$ in this region is determined, crystal particles with a particle diameter ranging from $0.1d_{max}$ to $d_{max}$ are defined as effective crystal particles, and then the crystal particles with the particle diameter ranging from $0.1d_{max}$ to $d_{max}$ in this region are counted one by one. Crystal particles whose particle diameters are less than $0.1d_{max}$ are defined as micropowder crystal particles, and micropowder crystal particles are not counted. It is ensured that a quantity of effective crystal particles in one region is 100 to 150, and particle diameters of effective crystal particles in each region are counted one by one. A method of measuring a particle diameter of a single crystal particle may be as follows: A circumscribed circle with a minimum area is drawn for the crystal particle (the circumscribed circle may be a perfect circle or an ellipse), and when the circumscribed circle is a perfect circle, a diameter of the perfect circle is the particle diameter of the crystal particle. When the circumscribed circle is an ellipse, an average length of a long axis and a short axis of the ellipse is used as the particle diameter of the crystal particle. After the particle diameter of the single effective crystal particle in each region is counted, particle diameters are summarized and recorded as particle diameters ($d_1$, $d_2$, $d_3$, ..., $d_n$) of n effective crystal particles. The "volume median crystallite diameter of crystal particles" $d_v50$ is then calculated based on the following formula.

$$d_v50 = \sqrt[3]{\frac{d_1^3 + d_2^3 + ... + d_n^3}{n}}$$

In any embodiment, the volume median crystallite diameter $d_v50$ of the crystal particles of the lithium-nickel-manganese-based composite oxide material ranges from 5 $\mu$m to 15 $\mu$m (for example, from 5 $\mu$m to 6 $\mu$m, from 6 $\mu$m

to 7 $\mu$m, from 7 $\mu$m to 8 $\mu$m, from 8 $\mu$m to 9 $\mu$m, from 9 $\mu$m to 10 $\mu$m, from 10 $\mu$m to 11 $\mu$m, from 11 $\mu$m to 12 $\mu$m, from 12 $\mu$m to 13 $\mu$m, from 13 $\mu$m to 14 $\mu$m, or from 14 $\mu$m to 15 $\mu$m), optionally, 5.5 $\mu$m to 11 $\mu$m, or optionally, 5.5 $\mu$m to 8 $\mu$m. Based on the foregoing solution, when the lithium-nickel-manganese-based composite oxide material is applied to a secondary battery, the secondary battery shows one or more types of improved performance.

In any embodiment, the volume median particle diameter $D_v50$ of the lithium-nickel-manganese-based composite oxide material ranges from 9 $\mu$m to 20 $\mu$m (for example, from 9 $\mu$m to 10 $\mu$m, from 10 $\mu$m to 11 $\mu$m, from 11 $\mu$m to 12 $\mu$m, from 12 $\mu$m to 13 $\mu$m, from 13 $\mu$m to 14 $\mu$m, from 14 $\mu$m to 15 $\mu$m, from 15 $\mu$m to 16 $\mu$m, from 16 $\mu$m to 17 $\mu$m, from 17 $\mu$m to 18 $\mu$m, from 18 $\mu$m to 19 $\mu$m, or from 19 $\mu$m to 20 $\mu$m), optionally, 9 $\mu$m to 13 $\mu$m, or optionally, 9 $\mu$m to 11 $\mu$m. Based on the foregoing solution, when the lithium-nickel-manganese-based composite oxide material is applied to a secondary battery, the secondary battery shows one or more types of improved performance.

In any embodiment, the lithium-nickel-manganese-based composite oxide material includes lithium-nickel-manganese-based composite oxide with a space group $P4_332$ and lithium-nickel-manganese-based composite oxide with a space group Fd-3m; and a percentage of the lithium-nickel-manganese-based composite oxide with the space group $P4_332$ is greater than a percentage of the lithium-nickel-manganese-based composite oxide with the space group Fd-3m.

In any embodiment, the lithium-nickel-manganese-based composite oxide material includes lithium-nickel-manganese-based composite oxide with a space group $P4_332$, and a percentage by weight of the lithium-nickel-manganese-based composite oxide with the space group $P4_332$ in the lithium-nickel-manganese-based composite oxide material is greater than 50%, or optionally, ranges from 80% to 91%, from 50% to 60%, from 60% to 70%, from 70% to 80%, from 80% to 90%, or from 90% to 95%. Based on the foregoing solution, when the lithium-nickel-manganese-based composite oxide material is applied to a secondary battery, the secondary battery shows one or more types of improved performance.

In any embodiment, the lithium-nickel-manganese-based composite oxide material includes $Mn^{3+}$, and a percentage by weight of $Mn^{3+}$ in the lithium-nickel-manganese-based composite oxide material is less than or equal to 5.5wt% (for example, ranging from 1wt% to 2wt%, from 2wt% to 3wt%, from 3wt% to 4wt%, or from 4wt% to 5wt%). Based on the foregoing solution, when the lithium-nickel-manganese-based composite oxide material is applied to a secondary battery, the secondary battery shows one or more types of improved performance.

In any embodiment, a specific surface area of the lithium-nickel-manganese-based composite oxide material is less than 1 $m^2$/g, or optionally, ranges from 0.1 $m^2$/g to 0.9 $m^2$/g. Based on the foregoing solution, when the lithium-nickel-manganese-based composite oxide material is applied to a secondary battery, the secondary battery shows one or more types of improved performance.

In any embodiment, a tap density of the lithium-nickel-manganese-based composite oxide material is greater than or equal to 1.9 $g/cm^3$, or optionally, ranges from 1.9 $g/cm^3$ to 3.0 $g/cm^3$. Based on the foregoing solution, when the lithium-nickel-manganese-based composite oxide material is applied to a secondary battery, the secondary battery shows one or more types of improved performance. The K value ranges from 1 to 2, a regular shape is obtained, and therefore, the material is easier to densely stack during a powder tapping process, which brings a high tap density.

In any embodiment, the lithium-nickel-manganese-based composite oxide material includes lithium-nickel-manganese-based composite oxide particles whose surfaces are at least partially provided with a coating layer.

In any embodiment, a material of the coating layer includes at least one of aluminum oxide, titanium oxide, zirconium oxide, boron oxide, rare-earth oxide, lithium salt, phosphate, borate, and fluoride.

In any embodiment, the coating layer includes a lithium fast-ion conductor layer.

In any embodiment, the coating layer has a multi-layer structure, and the coating layer includes the lithium fast-ion conductor layer on an inner side and an aluminum oxide layer on an outer side.

In any embodiment, the lithium fast-ion conductor is selected from oxide-based, phosphate-based, borate-based, sulfide-based, and LiPON-based inorganic materials with lithium ion conductivity.

In any embodiment, the lithium fast-ion conductor includes one or more of the following elements: phosphorus, titanium, zirconium, boron, and lithium.

In any embodiment, the lithium fast-ion conductor is selected from $Li_2BO_3$, $Li_3PO_4$, or a combination thereof. Based on the foregoing solution, when the lithium-nickel-manganese-based composite oxide material is applied to a secondary battery, the secondary battery shows one or more types of improved performance.

In any embodiment, the lithium fast-ion conductor refers to a substance having lithium ion conductivity of 1.0 $\times$ $10^{-5}$ S $cm^{-1}$. The lithium fast-ion conductor is selected from oxide-based, phosphate-based, borate-based, sulfide-based, and LiPON-based inorganic materials with lithium ion conductivity. The lithium fast-ion conductor is selected from, for example, $Li_2BO_3$ or $Li_3PO_4$.

In any embodiment, a general formula of the lithium-nickel-manganese-based composite oxide material is Formula I:

$$Li_aNi_{0.5-x}Mn_{1.5-y}M_{x+y}O_{4-z}X_z \qquad \text{Formula I}$$

where in Formula I, an element M is selected from Ti, Zr, W, Nb, Al, Mg, P, Mo, V, Cr, Zn, or a combination thereof; in Formula I, an element X is selected from F, Cl, I, or a combination thereof; and
in Formula I, $0.9 \leq a \leq 1.1$, $-0.2 \leq x \leq 0.2$ (for example, $0 \leq x \leq 0.2$), $-0.2 \leq y \leq 0.3$ (for example, $0 \leq y \leq 0.3$), and $0 \leq z \leq 1$.

In any embodiment, a ranges from 1 to 1.05.

In any embodiment, $-0.1 \leq x \leq 0.1$, for example, $-0.01 \leq x \leq 0.01$, or optionally, x = 0.

In any embodiment, $-0.1 \leq y \leq 0.1$, for example, $-0.01 \leq x \leq 0.01$, or optionally, x = 0.

In any embodiment, x + y ≥ 0, 0 ≤ x + y ≤ 0.1, or optionally, x + y = 0.

In any embodiment, z ranges from 0 to 0.1, for example, z = 0.

In any embodiment, the lithium-nickel-manganese-based composite oxide material is $Li_{1.01}Ni_{0.49}Mn_{1.51}O_4$.

In any embodiment, the lithium-nickel-manganese-based composite oxide is material $Li_{1.02}Ni_{0.5}Mn_{14}Ti_{0.1}O_4$.

In any embodiment, a method for preparing lithium-nickel-manganese-based composite oxide material is provided, including:

providing a precursor composition, where the precursor includes a lithium source, a nickel source, and a manganese source; and
sintering the precursor composition to obtain the lithium-nickel-manganese-based composite oxide material, where a K value of a lithium-nickel-manganese-based composite oxide material ranges from 1 to 2 (for example, from 1 to 1.1, from 1.1 to 1.2, from 1.2 to 1.3, from 1.3 to 1.4, from 1.4 to 1.5, from 1.5 to 1.6, from 1.6 to 1.7, from 1.7 to 1.8, from 1.8 to 1.9, or from 1.9 to 2), and the K value is calculated through the following formula:

$$K = D_v 50/d_v 50$$

where $d_v 50$ is a volume median crystallite diameter of crystal particles of the lithium-nickel-manganese-based composite oxide material; and
$D_v 50$ is a volume median particle diameter of the lithium-nickel-manganese-based composite oxide material. When the lithium-nickel-manganese-based composite oxide material obtained based on the foregoing solution is used as a positive electrode active material for a secondary battery (for example, a lithium-ion battery), the battery shows one or more types of improved performance selected from, for example, the following:

(i) improved cycling performance;
(ii) reduced ion leaching; and
(iii) reduced gassing.

In any embodiment, the lithium source may be selected from oxide, hydroxide, or salt of lithium, or a combination thereof. The nickel source may be selected from a nickel compound, hydroxide, or salt of nickel, or a combination thereof. The manganese source may be selected from oxide, hydroxide, or salt of manganese, or a combination thereof. The lithium source may be selected from lithium carbonate, lithium hydroxide, lithium nitrate, lithium oxide, or a combination thereof. The nickel source may be selected from nickel hydroxide, nickel oxide, nickel nitrate, nickel carbonate, or a combination thereof. The manganese source may be selected from manganese hydroxide, manganese oxide, manganese nitrate, manganese carbonate, or a combination thereof.

In any embodiment, the nickel source and the manganese source may be nickel manganese hydroxide, such as $Ni_{0.25}Mn_{0.75}(OH)_2$.

In any embodiment, a ratio of a volume median particle diameter of the nickel source to a volume median particle diameter of the lithium-nickel-manganese-based composite oxide material ranges from 0.4 to 1 (for example, 0.5:1, 0.6:1, 0.7:1, 0.8:1, 0.9:1, or 1.0:1). When the lithium-nickel-manganese-based composite oxide material obtained based on the foregoing solution is used as a positive electrode active material for a secondary battery (for example, a lithium-ion battery), the battery shows one or more types of improved performance.

In any embodiment, a ratio of a volume median particle diameter of the manganese source to a volume median particle diameter of the lithium-nickel-manganese-based composite oxide material ranges from 0.4:1 to 1:1 (for example, 0.5:1, 0.6:1, 0.7:1, 0.8:1, 0.9:1, or 1.0:1). When the lithium-nickel-manganese-based composite oxide material obtained based on the foregoing solution is used as a positive electrode active material for a secondary battery (for example, a lithium-ion battery), the battery shows one or more types of improved performance.

In any embodiment, the volume median particle diameter of the lithium source ranges from 1 $\mu$m to 20 $\mu$m (for example, from 3 $\mu$m to 10 $\mu$m). When the lithium-nickel-manganese-based composite oxide material obtained based on the foregoing solution is used as a positive electrode active material for a secondary battery (for example, a lithium-ion battery), the battery shows one or more types of improved performance.

In any embodiment, the sintering includes a first heat treatment stage; and a peak temperature at the first heat treatment stage ranges from 950°C to 1200°C (for example, from 950°C to 1000°C, from 1000°C to 1050°C, from 1050°C to 1100°C, from 1100°C to 1150°C, or from 1150°C to 1200°C), and a holding time of the peak temperature at the first heat treatment stage ranges from 5 hours to 30 hours (for example, from 5 hours to 10 hours, from 10 hours to 15 hours, from 15 hours to 20 hours, from 20 hours to 25 hours, or from 25 hours to 30 hours). When the lithium-nickel-manganese-based composite oxide material obtained based on the foregoing solution is used as a positive electrode active material for a secondary battery (for example, a lithium-ion battery), the battery shows one or more types of improved performance.

In any embodiment, a heating rate to the peak temperature at the first heat treatment stage is less than or equal to 5°C/min, or optionally, ranges from 0.5°C/min to 3°C/min, or optionally, from 1°C/min to 2°C/min, from 2°C/min to 3°C/min, from 3°C/min to 4°C/min, or from 4°C/min to 5°C/min. When the lithium-nickel-manganese-based composite oxide material obtained based on the foregoing solution is used as a positive electrode active material for a secondary battery (for example, a lithium-ion battery), the battery shows one or more types of improved performance.

In any embodiment, the sintering further includes a second heat treatment stage after the first heat treatment stage; and a peak temperature at the second heat treatment stage ranges from 550°C to 680°C (for example, from 550°C to 570°C, from 570°C to 590°C, from 590°C to 610°C, from 610°C to 630°C, from 630°C to 650°C, or from 650°C to 670°C), and a time at the second heat treatment stage ranges from 5 hours to 50 hours (for example, from 5 hours to 15 hours, from 15 hours to 25 hours, from 25 hours to 35 hours, or from 35 hours to 45 hours). When the lithium-nickel-manganese-based composite oxide material obtained based on the foregoing solution is used as a positive electrode active material for a secondary battery (for example, a lithium-ion battery), the battery shows one or more types of improved performance.

In any embodiment, the method for preparing lithium-nickel-manganese-based composite oxide material further includes subjecting the precursor composition to ball milling before the sintering, and optionally, a ball milling time is longer than 2 hours, for example, optionally, ranges from 2 hours to 6 hours. A purpose of ball milling is to disperse a product after the first heat treatment. When the lithium-nickel-manganese-based composite oxide material obtained based on the foregoing solution is used as a positive electrode active material for a secondary battery (for example, a lithium-ion battery), the battery shows one or more types of improved performance.

In any embodiment, a percentage of the lithium-nickel-manganese-based composite oxide material in the positive electrode active material may range from 10wt% to 100wt% (for example, 20wt%, 30wt%, 40wt%, 50wt%, 60wt%, 70wt%, 80wt%, or 90wt%).

In some embodiments, the positive electrode active material may also include another positive electrode active material well known in the art and applied to the battery in addition to the lithium-nickel-manganese-based composite oxide material in any one of the foregoing embodiments. In an example, another positive electrode active material may include at least one of the following materials: olivine-structured lithium-containing phosphate, lithium transition metal oxide, and respective modified compounds thereof. However, this application is not limited to these materials, and may also use other conventional materials that can be used as the positive electrode active material of the battery. One type of these positive electrode active materials may be used alone, or two or more types may be used in combination. An example of the lithium transition metal oxide may include but is not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ ($NCM_{333}$ for short), $LiNi_{0.5}Co_{0.2}Mn_{0.3}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), and $LiNi_{0.8}Co_{0.1}Mn_{0.1}O_2$ ($NCM_{811}$ for short)), lithium nickel cobalt aluminum oxide (for example, $LiNi_{0.85}Co_{0.15}Al_{0.05}O_2$), and modified compounds thereof. An example of the olivine-structured lithium-containing phosphate may include but is not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode film layer further optionally includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. In an example, the conductive agent may include at least one of superconducting carbon, acetylene black, carbon black, Ketjen black, carbon dots, carbon nanotubes, graphene, and carbon nanofibers.

In some embodiments, the positive electrode current collector may be a metal foil or a composite current collector. For example, as the metal foil, an aluminum foil may be used. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode plate may be prepared by using the following manners: The constituents used for preparing the positive electrode plate, such as the positive electrode active material, the conductive agent, the binder, and any other constituent, are dissolved in a solvent (such as N-methylpyrrolidone) to form a positive electrode slurry. The positive electrode slurry is applied onto the positive electrode current collector, followed by processes such as drying and cold pressing, to obtain the positive electrode plate.

[Negative electrode plate]

The negative electrode plate includes a negative electrode current collector and a negative electrode film layer disposed on at least one surface of the negative electrode current collector, and the negative electrode film layer includes a negative electrode active material.

In an example, the negative electrode current collector includes two back-to-back surfaces in a thickness direction of the negative electrode current collector, and the negative electrode film layer is disposed on either or both of the two back-to-back surfaces of the negative electrode current collector.

In some embodiments, the negative electrode current collector may be a metal foil or a composite current collector. For example, as the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. In an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon oxide, a silicon-carbon composite, a silicon-nitride composite, and a silicon alloy. The tin-based material may be selected from at least one of elemental tin, tin oxide, and a tin alloy. However, this application is not limited to these materials, and may also use other conventional materials that can be used as the negative electrode active material of the battery. One type of these negative electrode active materials may be used alone, or two or more types may be used in combination.

In some embodiments, the negative electrode film layer further optionally includes a binder. In an example, the binder may include at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. In an example, the conductive agent may include at least one of superconducting carbon, acetylene black, carbon black, Ketjen black, carbon dots, carbon nanotubes, graphene, and carbon nanofibers.

In some embodiments, the negative electrode film layer may further optionally include another adjuvant, for example, a thickener (such as sodium carboxymethyl cellulose, CMC-Na).

In some embodiments, the negative electrode plate may be prepared by using the following manners: the constituents used for preparing the negative electrode plate, such as the negative electrode active material, the conductive agent, the binder, and any other constituent, are dissolved in a solvent (such as deionized water) to form a negative electrode slurry. The negative electrode slurry is applied to the negative electrode current collector, and processes such as drying and cold pressing are performed to obtain the negative electrode plate.

[Electrolyte]

The electrolyte conducts ions between the positive electrode plate and the negative electrode plate. The electrolyte is not limited to any specific type in this application, and may be selected as required. For example, the electrolyte may be in a liquid state, a gel state, or an all-solid state.

In some embodiments, the electrolyte is in a liquid state and includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-gamma-butyrolactone, sulfolane, methyl sulfonyl methane, ethyl methanesulfonate, and diethyl sulfone.

In some embodiments, the electrolyte may further optionally include an additive. In an example, the additive may include a negative electrode film forming additive and a positive electrode film forming additive, or may further include an additive capable of improving some performance of the battery, for example, an additive for improving over-charge performance of the battery, and an additive for improving high-temperature performance or low-temperature performance of the battery.

[Separator]

In some embodiments, the secondary battery further includes a separator. The separator is not limited to any specific type in this application, and may be any well-known porous separator with good chemical stability and mechanical stability.

In some embodiments, a material of the separator may be selected from at least one of a glass fiber, non-woven fabrics, polyethylene, polypropylene polyethylene, and polyvinylidene fluoride. The separator may be a single-layer film or a multi-layer composite film. This is not particularly limited. When the separator is a multi-layer composite film, all layers may be made of same or different materials. This is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. The plastic may be, for example, polypropylene, polybutylene terephthalate, and polybutylene succinate.

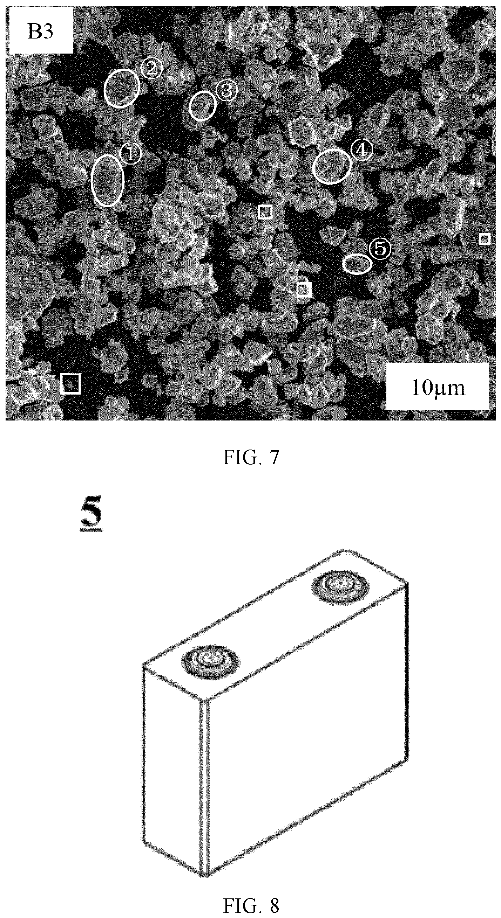

A shape of the secondary battery is not particularly limited in this application, which may be a cylindrical shape, a rectangular shape, or any other shape. For example, FIG. 8 shows a prism-shaped secondary battery 5 as an example.

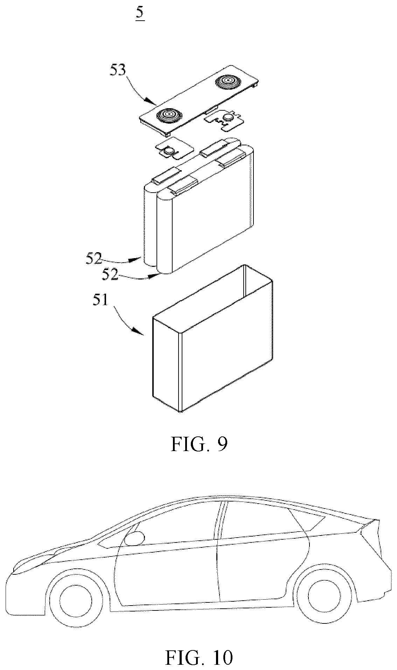

In some embodiments, referring to FIG. 9, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. A positive electrode plate, a negative electrode plate, and a separator may form an electrode assembly 52 through winding or lamination. The electrode assembly 52 is packaged in the accommodating cavity. The electrolyte solution is infiltrated into the electrode assembly 52. There may be one or more electrode assemblies 52 in the secondary battery 5, and persons skilled in the art may make choices according to actual requirements.

In some embodiments, secondary batteries may be assembled into a battery module, and the battery module may include one or more secondary batteries. A specific quantity may be chosen by persons skilled in the art based on use and capacity of the battery module.

In addition, this application further provides an electric apparatus. The electric apparatus includes at least one of the secondary battery, the battery module, or a battery pack provided in this application. The secondary battery, the battery module, or the battery pack may be used as a power source for the electric apparatus, or an energy storage unit for the electric apparatus. The electric apparatus may include but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, and an energy storage system.

The secondary battery, the battery module, or the battery pack may be selected for the electric apparatus based on a need for using the electric apparatus.

FIG. 10 shows an electric apparatus used as an example. The electric apparatus is a battery electric vehicle, a hybrid electric vehicle, a plug-in hybrid electric vehicle, or the like. To satisfy a requirement of the electric apparatus for the secondary battery with high power and high energy density, a battery pack or a battery module including the foregoing secondary battery may be used.

[Examples]

The following describes examples in this application. The examples described below are exemplary and only used to explain this application, but cannot be understood as a limitation on this application. Examples whose technical solutions or conditions are not specified are made based on technical solutions or conditions described in documents in the art, or made based on the product specification. The reagents or instruments used are all conventional products that can be purchased on the market if no manufacturer is indicated.

Examples 1a and 1b

Preparation of lithium-nickel-manganese-based composite oxide material

(1) Corresponding precursor compositions were provided based on component percentages in a target product $LiNi_{0.5}Mn_{1.5}O_4$. The precursor compositions included a lithium source ($Li_2CO_3$) and a nickel-manganese source ($Ni_{0.25}Mn_{0.75}(OH)_2$). Volume median particle diameters $D_v50(P)$ of the nickel-manganese source precursors respectively satisfied: $D_v50(P) = xD_v50(C)$, where $D_v50(C)$ was a volume median particle diameter of a product of a nickel-manganese-based composite oxide material, and x ranged from 0.4 to 1. For the volume median particle diameter of the nickel-manganese source precursor, refer to Table 2. The precursor compositions were mixed and subjected to ball milling for 3 hours, to obtain a ball-milled product.

(2) The ball-milled product was subjected to a first heat treatment. An atmosphere of air was used during the first heat treatment, and the first heat treatment included:

(a) heating from a room temperature to a peak temperature at a preset heating rate $c_1$ (°C/min); and
(b) holding the peak temperature $T_1$ for a specific time $t_1$, where
the heating rate, the peak temperature, and the holding time (holding time at the peak temperature) were shown in Table 1; the product obtained after the first heat treatment was cooled to the room temperature; and the lithium-nickel-manganese-based composite oxide material $Li_{1.01}Ni_{0.49}Mn_{1.51}O_4$ was obtained.

(3) The product of the previous step was subjected to a second heat treatment, where an atmosphere of air was used during the second heat treatment, and a peak temperature $T_2$ and a holding time $t_2$ during the second heat treatment were shown in Table 1. The product obtained after the heat treatment was cooled to the room temperature. The lithium-nickel-manganese-based composite oxide material $Li_{1.01}Ni_{0.49}Mn_{1.51}O_4$ was obtained.

Examples 2a to 2c

Preparation of lithium-nickel-manganese-based composite oxide material

A difference between Examples 2a, 2b, and 2c and Example 1a was as follows:
The first heat treatment and the second heat treatment were different in heating rate, peak temperature and/or holding time. For a specific difference in parameters in the preparation methods, refer to Table 1. For a physicochemical parameter of the lithium-nickel-manganese-based composite oxide material, refer to Table 2.

Example 3a

(1) Corresponding precursor compositions were provided based on component percentages in a target product $LiNi_{0.5}Mn_{1.4}Ti_{0.1}O_4$. The precursor compositions included a lithium source ($Li_2CO_3$), a nickel source ($Ni(OH)_2$), a manganese source ($Mn(OH)_2$), and dopant (Nano-$TiO_2$). The precursor compositions were mixed and subjected to ball milling for 3 hours, to obtain a ball-milled product. For the volume median particle diameter of the nickel-manganese source precursor, refer to Table 2.

(2) The ball-milled product was subjected to a first heat treatment. A heating rate, peak temperature, and holding time at the peak temperature during the first heat treatment were shown in Table 1. A product obtained after the heat treatment was cooled to the room temperature.

(3) The product of the previous step was ground for 3 hours.

(4) The ground product was subjected to a second heat treatment. For temperature and time during the heat treatment, refer to Table 1. A product obtained after the heat treatment was cooled to the room temperature. The lithium-nickel-manganese-based (titanium-doped) composite oxide $Li_{1.02}Ni_{0.5}Mn_{1.4}Ti_{0.1}O_4$ was obtained. For a particle parameter of the lithium-nickel-manganese-based composite oxide material, refer to Table 2.

Examples 3b, 3c, and 3d

A difference between Examples 3b, 3c, and 3d and Example 3a was step (3). Details are as follows.
(3) A first coating substance was added to a product of the previous step based on a target ratio, and a mixture was ground for 3 hours. For the first coating substance and its amount, refer to Table 1.
For a specific difference in parameters in the preparation methods, refer to Table 1. For a particle parameter of the lithium-nickel-manganese-based composite oxide material, refer to Table 2.

Examples 3e and 3f

(1) Corresponding precursor compositions were provided based on component percentages in a target product $LiNi_{0.5}Mn_{1.4}Ti_{0.1}O_4$. The precursor compositions included a lithium source ($Li_2CO_3$), a nickel source ($Ni(OH)_2$), a manganese source ($Mn(OH)_2$), and dopant (Nano-$TiO_2$). The precursor compositions were mixed and subjected to ball milling for 3 hours, to obtain a ball-milled product.
(2) The ball-milled product was subjected to a first heat treatment. A heating rate, peak temperature, and holding time during the first heat treatment were shown in Table 1. A product obtained after the heat treatment was cooled to the room temperature.
(3) A first coating substance was added to a product of the previous step based on a target ratio, and a mixture was ground for 3 hours. For the first coating substance and its amount, refer to Table 1.
(4) The ground product was subjected to a second heat treatment. For temperature and time during the second heat treatment, refer to Table 1. A product obtained after the heat treatment was cooled to the room temperature.
(5) A second coating substance was added to a product of the previous step based on a target ratio, and a mixture was ground for 3 hours. For the second coating substance and its amount, refer to Table 1.
(6) The ground product was subjected to a third heat treatment. For temperature and time during the heat treatment, refer to Table 1. A product obtained after the heat treatment was cooled to the room temperature. The lithium-nickel-manganese-based composite oxide material was obtained.

For a specific difference in parameters in the preparation methods, refer to Table 1. For a particle parameter of the lithium-nickel-manganese-based composite oxide material, refer to Table 2.

Comparative Examples 1 to 3

Three different types of commercially-available lithium-nickel-manganese-based composite oxide material powder were provided and numbered B1, B2, and B3 respectively.

Assembly of a half cell (button cell)

A lithium plate was used as a counter electrode, and lithium-nickel-manganese-based composite oxide materials in the examples and the comparative examples were assembled into the half cell.
The lithium-nickel-manganese-based composite oxide material was mixed with conductive carbon black and PVDF in a weight ratio of 90:5:5, an appropriate amount of solvent was added, and the mixture was uniformly stirred to obtain a positive electrode slurry. The positive electrode slurry was applied onto an aluminum foil, followed by drying, to obtain the positive electrode plate. A loading amount of lithium-nickel-manganese-based composite oxide material on the positive electrode plate was 0.015 $g/cm^2$.
A mixed solution of carbonate, phosphate, and the like containing 1 mol/L $LiPF_6$ was used as an electrolyte.
A polypropylene film with a thickness of 12 $\mu$m ($\Phi$16 mm) was used as a separator, and a lithium plate, the separator, and the positive electrode plate were placed sequentially, so that the separator was placed between the metal lithium plate and the composite negative electrode plate for isolation. The electrolyte was injected, and a CR2030 button cell was assembled, and left to stand for 24 hours to obtain the half cell.

Preparation of a soft pack battery

Lithium-nickel-manganese-based composite oxide materials in the examples and the comparative examples were assembled into the soft pack battery.
The lithium-nickel-manganese-based composite oxide material was mixed with conductive carbon black and PVDF in a weight ratio of 96:2.5:1.5, an appropriate amount of solvent was added, and the mixture was uniformly stirred to obtain a positive electrode slurry. The positive electrode slurry was applied onto an aluminum foil, followed by drying, to obtain a positive electrode plate. A loading amount of lithium-nickel-manganese-based composite oxide material on the positive electrode plate was 0.02 g/cm$^2$.

The graphite was mixed with conductive carbon black and carboxymethyl cellulose in a weight ratio of 96:1:3, an appropriate amount of solvent was added, and the mixture was uniformly stirred to obtain a negative electrode slurry. The negative electrode slurry was applied onto a copper foil, followed by drying, to obtain a negative electrode plate. A loading amount of graphite on the negative electrode plate was 0.008 g/cm$^2$.

The battery uses the same electrolyte as the half button cell.

A polypropylene film (Φ16 mm) of a thickness of 12 μm was used as a separator, the foregoing prepared positive electrode plate, the separator, and the negative electrode plate were placed sequentially, so that the separator was placed between the positive electrode plate and the negative electrode plate for separation, followed by winding and packaging with an aluminum plastic bag. The electrolyte was injected, followed by packaging, formation, and grading, to obtain a soft pack battery cell.

Analysis and test

1. Morphology observation, particle diameter testing, and tap density testing

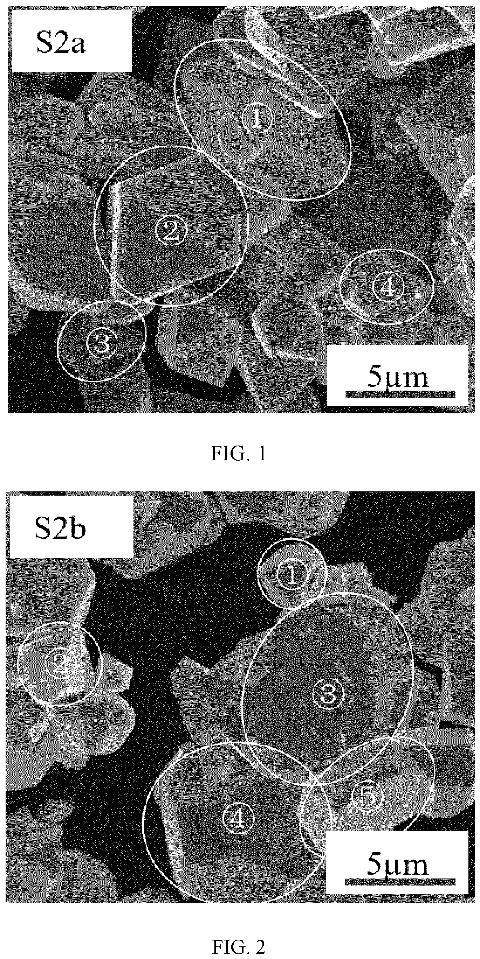

FIG. 1 shows a scanning electron microscope photograph of a lithium-nickel-manganese-based composite oxide material in Example 2a. An elliptical outline showed some representative crystal particles, including a crystal particle 1, a crystal particle 2, a crystal particle 3, and a crystal particle 4, and particle diameters of the crystal particles were 6.0 μm, 7.1 μm, 3.8 μm, and 3.9 μm separately.

FIG. 2 shows a scanning electron microscope photograph of a lithium-nickel-manganese-based composite oxide material in Example 2b. An elliptical outline showed some representative crystal particles, including a crystal particle 1, a crystal particle 2, a crystal particle 3, a crystal particle 4, and a crystal particle 5, and particle diameters of the crystal particles were 3.1 μm, 3.8 μm, 8.2 μm, 7.5 μm, and 5.7 μm separately.

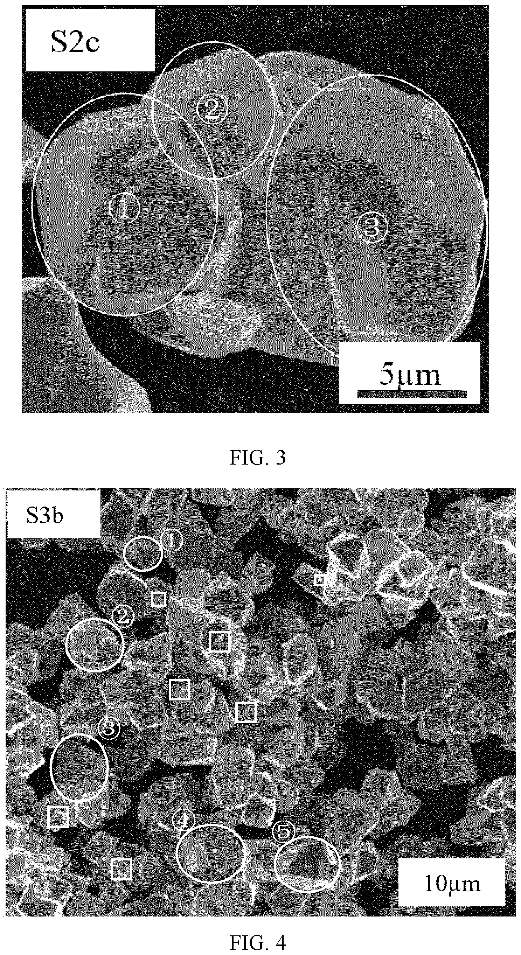

FIG. 3 shows a scanning electron microscope photograph of a lithium-nickel-manganese-based composite oxide material in Example 2c. An elliptical outline showed some representative crystal particles, including a crystal particle 1, a crystal particle 2, and a crystal particle 3, and particle diameters of the crystal particles were 9.3 μm, 6.0 μm, and 12.9 μm separately.

FIG. 4 shows a scanning electron microscope photograph of a lithium-nickel-manganese-based composite oxide material in Example 3b. A circular outline showed some representative crystal particles, including a crystal particle 1, a crystal particle 2, a crystal particle 3, a crystal particle 4, and a crystal particle 5, and particle diameters were 4.2 μm, 6.6 μm, 9.5 μm, 9.6 μm, and 9.1 μm separately. A square outline in the figure showed micropowder crystal particles of a particle diameter less than $0.1d_{max}$, and the micropowder crystal particles were not counted.

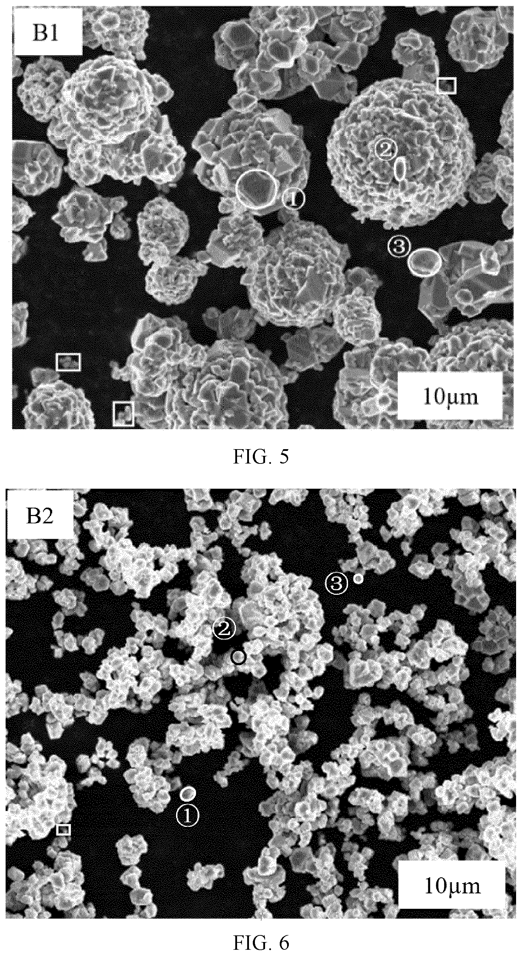

FIG. 5 shows a scanning electron microscope photograph of lithium-nickel-manganese-based composite oxide material in Comparative Example 1. A circular outline showed some representative crystal particles, including a crystal particle 1, a crystal particle 2, and a crystal particle 3, and particle diameters were 4.7 μm, 1.9 μm, and 3.5 μm separately. A square outline in the figure showed micropowder crystal particles of a particle diameter less than $0.1d_{max}$, and the micropowder crystal particles were not counted.

FIG. 6 shows a scanning electron microscope photograph of lithium-nickel-manganese-based composite oxide material in Comparative Example 2. As shown in the figure, a circular outline showed some representative crystal particles, including a crystal particle 1, a crystal particle 2, and a crystal particle 3, and particle diameters were 1.5 μm, 1.6 μm, and 1.0 μm separately. A square outline in the figure showed micropowder crystal particles of a particle diameter less than $0.1d_{max}$, and the micropowder crystal particles were not counted.

FIG. 7 shows a scanning electron microscope photograph of lithium-nickel-manganese-based composite oxide material in Comparative Example 3. As shown in the figure, a circular outline showed some representative crystal particles, including a crystal particle 1, a crystal particle 2, a crystal particle 3, a crystal particle 4, and a crystal particle 5, and particle diameters were 5.0 μm, 4.4 μm, 3.0 μm, 4.3 μm, and 2.8 μm separately. A square outline in the figure showed micropowder crystal particles of a particle diameter less than $0.1d_{max}$, and the micropowder crystal particles were not counted.

The volume median crystallite diameter $d_v50$ and the volume median particle diameter $D_v50$ of the crystal particles of the lithium-nickel-manganese-based composite oxide material in examples and comparative examples were measured separately in the foregoing method, and the K value was calculated based on the following formula:

$$K = D_v50/d_v50$$

For the tap density test, refer to standard GB/T 5162-2006 "Metallic powders determination of tap density".
For a result, refer to Table 2.

2. Testing of battery performance:

1. Percentage of $Mn^{3+}$ (wt%) and percentage of $P4_332$ structures

Half cells in the examples and comparative examples were tested. Discharge capacities ($Q_1$) of the half cells at 4.5 V to 3.5 V and total discharge capacities ($Q_2$) of the half cells at 4.9 V to 3.5 V were measured, and a percentage of 4 V platform capacity was calculated based on x = Q1/Q2. A specific test method was as follows:
At 25°C, the half button cell was charged to a voltage of 4.9 V at a constant current of 0.1C, then charged to a current of 0.05C at a constant voltage of 4.9 V, and left to stand for 5 minutes, and the half button cell was discharged to a voltage of 3.5 V at a constant current of 0.1C. The discharge capacities ($Q_1$) at 4.5 V to 3.5 V and the total discharge capacities ($Q_2$) at 4.9 V to 3.5 V were abstracted from original charge/discharge data.
Herein, x could reflect the following component characteristics (1) and (2) of materials:

(1) The percentage (r) of $Mn^{3+}$ in the lithium-nickel-manganese-based composite oxide material could be calculated based on x:

$$r \approx 0.45x/1.5 = 0.3x;$$

in the foregoing formula, a coefficient of 0.45 is a mass percentage of Mn in $LiNi_{0.5}Mn_{1.5}O_4$, and 1.5 is 1.5 in the chemical formula (that is, a stoichiometric ratio of Mn/Li).
(2) A spinel phase of the material only included a space group $P4_332$ and a space group Fd-3m. The percentage (y) of the nickel-manganese-based composite oxide with the space group $P4_332$ in the lithium-nickel-manganese-based composite oxide material could be further calculated based on x:

$$Y \approx 1 - x/0.375 = 1 - r/0.1125;$$

where in the foregoing formula, a coefficient of 0.375 was calculated by the following method: It was assumed that nickel and manganese were completely disordered, in theory, 3/4 of Ni became $Ni^{3+}$, correspondingly, 3/4 of a $Ni^{3+}/Ni^{2+}$ platform in a charge/discharge curve became the 4 V platform, $Ni^{3+}/Ni^{2+}$ platform capacity accounted for half of the total capacity, and therefore, $1/2 \times 3/4 = 0.375$. The lithium-nickel-manganese-based composite oxide with the space group $P4_332$ implemented charging or discharging through a valence change of $Ni^{2+}/Ni^{3+}$ and $Ni^{3+}/Ni^{4+}$, and a discharge voltage ranged from 4.8 V to 4.5 V (mainly, from 4.7 V to 4.6 V); and the lithium-nickel-manganese-based composite oxide with the space group Fd-3m used variable valence pairs of $Ni^{2+}/Ni^{3+}$, $Ni^{3+}/Ni^{4+}$, and $Mn^{3+}/Mn^{4+}$ for charging or discharging, a discharge voltage of $Mn^{3+}/Mn^{4+}$ ranged from 4.4 V to 3.5 V (mainly around 4.0 V), and therefore, the value of r could accurately reflect the percentage of $Mn^{3+}$ in the material, and the percentage of $Mn^{3+}$ had a linear positive correlation with the percentage of Fd-3m.
For statistical results of the percentage (r) of $Mn^{3+}$ and the percentage (y) of the nickel-manganese-based composite oxide with the space group $P4_332$, refer to Table 3.

2. Cycling performance

Graphite soft pack batteries in the examples and comparative examples were tested.
At 25°C, the graphite soft pack battery was charged to a voltage of 4.9 V at a constant current of 0.3C, then charged to a current of 0.05C at a constant voltage of 4.9 V, and left to stand for 5 minutes. The graphite soft pack battery was discharged to a voltage of 3.5 V at a constant current of 0.33C. This was a charge/discharge cycle, and current discharge capacity was discharge capacity at the first cycle. The entire battery was subjected to a plurality of cyclic charge/discharge tests in the foregoing method until the discharge capacity of the entire battery decayed to 80%, and the number of cycles of the entire battery was recorded. For a statistical result, refer to Table 3.

3. Gassing and ion leaching

Graphite soft pack batteries in the examples and comparative examples were tested.
At 25°C, the graphite soft pack battery was charged to a voltage of 4.9 V at a constant current of 0.3C, and then charged to a current of 0.05C at a constant voltage of 4.9 V. The fully charged battery was placed in a constant-temperature workshop at 25°C. During the process, a volume of the soft pack battery cell was measured in a dunking method every other 10 days, and an increased volume was a gassing volume. After 100 days, gassing data of 100-day storage was obtained. After the test, the battery was discharged to 3.5 V at a constant current of 0.33C, and then discharged to 3.5 V at a constant current of 0.05C, that is, a fully discharged battery was obtained.

The fully discharged battery was disassembled, an anode plate was detached, and the anode plate was slightly shaken in a DMC solvent for 5s to remove residual electrolyte on a surface of the anode, followed by drying. A negative electrode material was scraped from the surface of the anode plate, and a percentage ($\mu$g/g) of Ni and a percentage ($\mu$g/g) of Mn in the negative electrode material were detected through a technology of inductively coupled plasma spectroscopy, and were used as a leaching value of Ni ions and a leaching value of Mn ions. For a test result of gassing and ion leaching, refer to Table 3.

**Table 1**

| No. | Component | First heat treatment | | | First coating substance mass percentage | Second heat treatment | | Second coating substance mass percentage | Third heat treatment | |
|---|---|---|---|---|---|---|---|---|---|---|
| | | Heating rate $c_1$ (°C/min) | Peak temperature $T_1$ (°C) | Holding time $t_1$ (h) | | Peak temperature $T_2$ (°C) | Holding time $t_2$ (h) | | Peak temperature $T_3$ (°C) | Holding time $t_3$ (h) |
| Example 1a | $Li_{1.01}Ni_{0.49}Mn_{1.51}O_4$ | 1 | 970 | 20 | - | 600 | 10 | - | Not available | |
| Example 1b | $Li_{1.01}Ni_{0.49}Mn_{1.51}O_4$ | 1 | 970 | 20 | - | 600 | 50 | - | | |
| Example 2a | $Li_{1.04}Ni_{0.49}Mn_{1.51}O_4$ | 2 | 970 | 30 | - | 610 | 15 | - | | |
| Example 2b | $Li_{1.01}Ni_{0.49}Mn_{1.51}O_4$ | 2 | 980 | 20 | - | 610 | 15 | - | | |
| Example 2c | $Li_{1.02}Ni_{0.49}Mn_{1.51}O_4$ | 2 | 1200 | 3 | - | 640 | 20 | - | | |
| Example 3a | $Li_{1.02}Ni_{0.5}Mn_{1.4}Ti_{0.1}O_4$ | 1 | 970 | 20 | - | 600 | 15 | - | Not available | |
| Example 3b | $Li_{1.02}Ni_{0.5}Mn_{1.4}Ti_{0.1}O_4$ | 1 | 970 | 20 | 1% $Al_2O_3$ | 600 | 15 | - | | |
| Example 3c | $Li_{1.02}Ni_{0.5}Mn_{1.4}Ti_{0.1}O_4$ | 1 | 970 | 20 | 1% $Li_2BO_3$ | 600 | 15 | - | | |
| Example 3d | $Li_{1.02}Ni_{0.5}Mn_{1.4}Ti_{0.1}O_4$ | 1 | 970 | 20 | 0.5% $Al_2O_3$+ 0.5% $Li_2BO_3$ | 600 | 15 | - | | |

| No. | Component | First heat treatment | | | First coating substance mass percentage | Second heat treatment | | Second coating substance mass percentage | Third heat treatment | |
|---|---|---|---|---|---|---|---|---|---|---|
| | | Heating rate $c_1$ (°C/min) | Peak temperature $T_1$ (°C) | Holding time $t_1$ (h) | | Peak temperature $T_2$ (°C) | Holding time $t_2$ (h) | | Peak temperature $T_3$ (°C) | Holding time $t_3$ (h) |
| Example 3e | $Li_{1.02}Ni_{0.5}Mn_{1.4}Ti_{0.1}O_4$ | 1 | 970 | 20 | 0.5% $Li_2BO_3$ | 600 | 5 | 0.5% $Al_2O_3$ | 600 | 10 |
| Example 3f | $Li_{1.02}Ni_{0.5}Mn_{1.4}Ti_{0.1}O_4$ | 1 | 970 | 20 | 0.5% $Li_3PO_4$ | 600 | 5 | 0.5% $Al_2O_3$ | 600 | 10 |
| Comparative Example 1 | $Li_{1.02}Ni_{0.49}Mn_{1.51}O_4$ | - | - | - | - | - | - | - | - | - |
| Comparative Example 2 | $Li_{1.01}Ni_{0.50}Mn_{1.50}O_4$ | - | - | - | - | - | - | - | - | - |
| Comparative Example 3 | $Li_{0.99}Ni_{0.48}Mn_{1.52}O_4$ | - | - | - | - | - | - | - | - | - |

**Table 2**

| No. | Nickel-manganese precursor | Nickel-manganese-based composite oxide material | | | | | |
|---|---|---|---|---|---|---|---|
| | Volume median particle diameter | Volume median particle diameter $D_v50$ ($\mu$m) | Volume median particle diameter of crystal particle $d_v50$ ($\mu$m) | K value ($D_v50/d_v50$) | BET specific surface area ($m^2$/g) | Tap density (g/cm$^3$) | Morphology of crystal particle |
| Example 1a | 5.6 | 9.5 | 7.0 | 1.36 | 0.26 | 2.05 | Octahedron |
| Example 1b | 5.6 | 9.7 | 6.9 | 1.41 | 0.28 | 1.94 | Octahedron |
| Example 2a | 5.3 | 9.5 | 5.9 | 1.61 | 0.73 | 2.11 | Octahedron |
| Example 2b | 4.6 | 9.3 | 6.6 | 1.41 | 0.82 | 2.05 | Octahedron (octahedron-like) |
| Example 2c | 10.9 | 19.8 | 10.5 | 1.89 | 0.58 | 2.02 | Polyhedron |
| Example 3a | 5.3 | 9.6 | 6.3 | 1.52 | 0.66 | 1.90 | Octahedron |
| Example 3b | 5.3 | 9.0 | 6.2 | 1.45 | 0.69 | 2.61 | Octahedron |
| Example 3c | 5.3 | 9.5 | 6.6 | 1.44 | 0.69 | 2.06 | Octahedron |
| Example 3d | 5.3 | 9.8 | 6.7 | 1.46 | 0.68 | 2.33 | Octahedron |
| Example 3e | 5.3 | 9.2 | 6.2 | 1.48 | 0.67 | 2.41 | Octahedron |
| Example 3f | 5.3 | 9.1 | 6.1 | 1.49 | 0.67 | 2.50 | Octahedron |
| Comparative Example 1 | - | 10.8 | 2.6 | 4.15 | 0.24 | 1.53 | Octahedron and polyhedron |
| Comparative Example 2 | - | 4.3 | 1.7 | 2.53 | 0.40 | 1.72 | Irregular polyhedron and polyhedron |
| Comparative Example 3 | - | 6.3 | 3.0 | 2.10 | 0.57 | 1.65 | Irregular polyhedron and polyhedron |

**Table 3**

| No. | Discharge at 0.1C at a first cycle of half button cell | | | | | Soft pack battery (3.5 V to 4.9 V, 0.3C/0.33C) | | The soft pack battery was fully charged and stored for 100 days at room temperature | | |
|---|---|---|---|---|---|---|---|---|---|---|
| | Capacity at 3.5 V to 4.9 V (mAh/g) | Capacity at 3.5 V to 4.5 V (mAh/g) | Percentage of capacity at 3.5 V to 4.5 V | Percentage $r$ of $Mn^{3+}$ | Percentage $y$ of $P4_332$ | Discharge capacity after the first cycle (mAh/g) | Number* of cycles when cut-off capacity was reached | Percentage of Ni (wt%) | Percentage of Mn (wt%) | Gassing (ml/Ah) |
| Example 1a | 136.2 | 9.8 | 7.2% | 2.2% | 81% | 129.2 | 374 | 308 | 2072 | 35.6 |
| Example 1b | 136.6 | 4.7 | 3.4% | 1.0% | 91% | 128.4 | 428 | 287 | 1895 | 32.7 |
| Example 2a | 135.5 | 5.8 | 4.3% | 1.3% | 89% | 127.9 | 365 | 297 | 1976 | 34.1 |
| Example 2b | 133.2 | 8.4 | 6.3% | 1.9% | 83% | 127.3 | 397 | 268 | 2009 | 29.7 |
| Example 2c | 130.4 | 8.9 | 6.8% | 2.0% | 82% | 123.6 | 449 | 209 | 1665 | 27.2 |
| Example 3a | 133.2 | 8.4 | 6.3% | 1.9% | 83% | 127.6 | 481 | 262 | 1895 | 35.3 |

| No. | Discharge at 0.1C at a first cycle of half button cell | | | | | Soft pack battery (3.5 V to 4.9 V, 0.3C/0.33C) | | The soft pack battery was fully charged and stored for 100 days at room temperature | | |
|---|---|---|---|---|---|---|---|---|---|---|
| | Capacity at 3.5 V to 4.9 V (mAh/g) | Capacity at 3.5 V to 4.5 V (mAh/g) | Percentage of capacity at 3.5 V to 4.5 V | Percentage r of $Mn^{3+}$ | Percentage y of $P4_332$ | Discharge capacity after the first cycle (mAh/g) | Number* of cycles when cut-off capacity was reached | Percentage of Ni (wt%) | Percentage of Mn (wt%) | Gassing (ml/Ah) |
| Example 3b | 131.2 | 7.1 | 5.4% | 1.6% | 86% | 125.3 | 626 | 201 | 1592 | 16.6 |
| Example 3c | 134.0 | 7.8 | 5.8% | 1.7% | 84% | 128.7 | 570 | 158 | 1235 | 25.7 |
| Example 3d | 131.5 | 6.5 | 4.9% | 1.5% | 87% | 127.2 | 624 | 185 | 1376 | 21.2 |
| Example 3e | 132.8 | 6.6 | 5.0% | 1.5% | 87% | 126.8 | 697 | 167 | 1286 | 18.3 |
| Example 3f | 133.5 | 7.5 | 5.6% | 1.7% | 85% | 126.4 | 724 | 157 | 1168 | 20.5 |
| Comparative Example 1 | 135.0 | 4.4 | 3.3% | 1.0% | 91% | 126.5 | 120 | 367 | 3021 | 46.7 |
| Comparative Example 2 | 136.7 | 5.7 | 4.2% | 1.3% | 89% | 128.7 | 196 | 353 | 2864 | 49.2 |
| Comparative Example 3 | 134.7 | 5.5 | 4.1% | 1.2% | 89% | 126.9 | 283 | 312 | 2571 | 36.9 |

Based on the data in Table 3, the following conclusion could be drawn:

(1) K value

K values of the lithium-nickel-manganese-based composite oxide material in Examples 1a and 1b and Examples 2a to 2c ranged from 1.36 to 1.89, and K values of the lithium-nickel-manganese-based composite oxide material in Comparative Examples 1 to 3 ranged from 2.10 to 4.15.

After the battery performance test, it was found that the lithium-nickel-manganese-based composite oxide material in the examples had the following advantages:

The lithium-nickel-manganese-based composite oxide material in Examples 1a and 1b and Examples 2a to 2c was used as the positive electrode active material for the lithium-ion battery, and the number of cycles of the lithium-ion battery when reaching the cut-off capacity ranged from 365 to 449, which was greater than 120 to 283 cycles in the comparative examples. This indicated that when the material in the example was used for the lithium-ion battery, the battery had improved cycling performance.

The lithium-nickel-manganese-based composite oxide material in Examples 1a and 1b and Examples 2a to 2c was used as the positive electrode active material for the lithium-ion battery, the leaching value of Ni ions in the lithium-ion battery ranged from 209 $\mu$g/g to 308 $\mu$g/g, and was less than 312 $\mu$g/g to 367 $\mu$g/g in the comparative examples. The leaching value of Mn ions in the lithium-ion battery ranged from 1665 $\mu$g/g to 2072 $\mu$g/g and was less than 2571$\mu$g/g to 3021 $\mu$g/g in the comparative examples. This indicated that when the material in the example was used for the lithium-ion battery, the battery experienced reduced ion leaching.

The lithium-nickel-manganese-based composite oxide material in Examples 1a and 1b and Examples 2a to 2c was used as the positive electrode active material for the lithium-ion battery, a gassing volume of the lithium-ion battery ranged from 27.2 ml/Ah to 35.6 ml/Ah, and was less than 36.9 ml/Ah to 49.2 ml/Ah in the comparative examples. This indicated that when the material in the example was used for the lithium-ion battery, the battery experienced reduced gassing.

(2) Doping

The lithium-nickel-manganese-based composite oxide material in Example 3a was doped with Ti element, the lithium-nickel-manganese-based composite oxide material was used as the positive electrode active material for the lithium-ion battery, the number of cycles of the lithium-ion battery when reaching the cut-off capacity was 481, the leaching value of Ni ions in the lithium-ion battery was 262 $\mu$g/g and less than 1895 $\mu$g/g in the comparative example, and a gassing volume was 35.3 ml/Ah.

The lithium-nickel-manganese-based composite oxide material in Example 3a showed better cycling performance, lower ion leaching, and lower gassing than that in Examples 1a and 1b and Examples 2a to 2c. This indicated that the doped lithium-nickel-manganese-based composite oxide material had better performance.

(3) Coating

The lithium-nickel-manganese-based composite oxide material in Examples 3b to 3e had a coating layer, the lithium-nickel-manganese-based composite oxide material was used as the positive electrode active material for the lithium-ion battery, the number of cycles of the lithium-ion battery when reaching the cut-off capacity ranged from 570 to 724, the leaching value of Ni ions in the lithium-ion battery ranged from 157 $\mu$g/g to 201 $\mu$g/g, the leaching value of Mn ions in the lithium-ion battery ranged from 1168 $\mu$g/g to 1592 $\mu$g/g, and a gassing volume of the lithium-ion battery ranged from 16.6 ml/Ah to 25.7 ml/Ah.

The lithium-nickel-manganese-based composite oxide material in Examples 3b to 3e showed better cycling performance, lower ion leaching, and lower gassing than that in Example 3a. This indicated that the lithium-nickel-manganese-based composite oxide material with the coating layer had better performance.

(4) Preparation process

To obtain lithium-nickel-manganese-based composite oxide material with a K value ranged from 1 to 2, critical factors were as follows:

Factor 1: Temperature and holding time during the first heat treatment. The peak temperature during the first heat treatment determined an upper limit and an average of particle diameters of crystal particles, and also promoted growth and deformation of the crystal particles. The peak temperature and the holding time during the first heat treatment jointly determined a size and morphology of the crystal particles. The peak temperature at the first heat treatment stage preferably ranged from 950°C to 1200°C, and the holding time at the peak temperature at the first heat treatment stage preferably ranged from 5 hours to 30 hours.

Factor 2: Heating rate of the first heat treatment. An excessively great heating rate caused local thermal imbalance, and as a result, some crystal particles became large first, and large crystal particles severely absorbed small crystal particles, which caused severe adhesion between the crystal particles. A heating rate from a room temperature to the peak temperature during the first heat treatment was preferably less than or equal to 5°C/min, or optionally, ranged from 0.5°C/min to 3°C/min.

Factor 3: Particle diameters of nickel source and manganese source precursors. With smaller particles of the nickel source and manganese source precursors, more small particles needed to be combined to obtain finished particles with the same target particle diameter, and correspondingly, temperature during the first heat treatment needed to be increased, which also caused serious adhesion between particles in the finished product. However, excessively large nickel-manganese precursor particles were difficult to burn through, and the temperature during the first heat treatment was also increased, which caused adhesion between the particles. A ratio of a volume median particle diameter of the nickel source and manganese source precursors to a volume median particle diameter of the lithium-nickel-manganese-based composite oxide material ranged from 0.4 to 1, or optionally, 0.6 to 0.8.

A preparation process in Examples 1a and 1b, Examples 2a to 2c, and Examples 3a to 3f complied with the foregoing requirements, and therefore, the lithium-nickel-manganese-based composite oxide material with the K value ranged from 1 to 2 was successfully obtained.

(5) Percentage of $P4_332$ structures or percentage of $Mn^{3+}$

As demonstrated in Examples 1a and 1b, Examples 2a to 2c, and Examples 3a to 3f, more than 50% of $P4_332$ structure (or less than 5% of $Mn^{3+}$) facilitated the performance of the battery.

To obtain lithium-nickel-manganese-based composite oxide material mainly including the $P4_332$ structure, critical factors were as follows:

Factor 1: The temperature and the holding time during the second heat treatment matched with the target crystal particle diameter and the temperature and the time during the first heat treatment. Because $P4_332$ belonged to a low-temperature phase, from the perspective of thermodynamics, lower temperature facilitated an increment in the $P4_332$ structure. However, from the perspective of kinetics, lower temperature was less favorable for atomic diffusion for phase transition. Higher temperature during the first heat treatment facilitated an increment in the percentage of the Fd-3m structure and an increment in the holding time during the second heat treatment. A larger crystal particle required greater diffusion driving force and the higher temperature during the second heat treatment. The temperature during the second heat treatment also affected the time during the second heat treatment. The peak temperature at the second heat treatment stage preferably ranged from 550°C to 680°C, and the holding time at the second heat treatment stage preferably ranged from 5 hours to 50 hours.

Factor 2: Elemental composition. Generation of an Fd-3m phase was related to each atomic radius of a transition metal layer. Atoms with different radii (especially atoms with stable radii) could stabilize a crystal structure and improve tendency of orderly arrangement of Ni and Mn, and ions of Ti, Cr, and Zr with higher valences and doping at a Ni position with atoms with valences of +1 and +2 were all related to this. A doping element was preferably the Ti element.

It should be noted that this application is not limited to the foregoing embodiments. The foregoing embodiments are merely examples, and embodiments having constructions substantially the same as those of the technical idea and having the same effects as the technical idea within the scope of the technical solutions of this application are all included in the technical scope of this application. In addition, within the scope without departing from the essence of this application, various modifications that can be conceived by persons skilled in the art are applied to the embodiments, and other modes constructed by combining some of the constituent elements in the embodiments are also included in the scope of this application.

**Claims**

1.  A lithium-nickel-manganese-based composite oxide material, wherein a K value of the lithium-nickel-manganese-based composite oxide material ranges from 1 to 2, and the K value is calculated through the following formula:

$$K = D_v50/d_v50$$

wherein $d_v50$ is a volume median crystallite diameter of crystal particles of the lithium-nickel-manganese-based composite oxide material; and $D_v50$ is a volume median particle diameter of the lithium-nickel-manganese-based composite oxide material.

2. The lithium-nickel-manganese-based composite oxide material according to claim 1, wherein the volume median crystallite diameter $d_v50$ of the crystal particles of the lithium-nickel-manganese-based composite oxide material ranges from 5 $\mu$m to 15 $\mu$m, or optionally, 5.5 $\mu$m to 11 $\mu$m.

3. The lithium-nickel-manganese-based composite oxide material according to any one of claim 1 or 2, wherein the volume median particle diameter $D_v50$ of the lithium-nickel-manganese-based composite oxide material ranges from 9 $\mu$m to 20 $\mu$m, or optionally, 9 $\mu$m to 11 $\mu$m.

4. The lithium-nickel-manganese-based composite oxide material according to any one of claims 1 to 3, wherein the lithium-nickel-manganese-based composite oxide material comprises lithium-nickel-manganese-based composite oxide with a space group $P4_332$ and lithium-nickel-manganese-based composite oxide with a space group Fd-3m; and a percentage of the lithium-nickel-manganese-based composite oxide with the space group $P4_332$ is greater than a percentage of the lithium-nickel-manganese-based composite oxide with the space group Fd-3m.

5. The lithium-nickel-manganese-based composite oxide material according to claim 4, wherein a percentage by weight of the lithium-nickel-manganese-based composite oxide with the space group $P4_332$ in the lithium-nickel-manganese-based composite oxide material is greater than 50%, or optionally, ranges from 80% to 91%.

6. The lithium-nickel-manganese-based composite oxide material according to any one of claims 1 to 5, wherein the lithium-nickel-manganese-based composite oxide material comprises $Mn^{3+}$, and a percentage of $Mn^{3+}$ in the lithium-nickel-manganese-based composite oxide material is less than or equal to 5.5wt%, or optionally, ranges from 1.0wt% to 2.2wt%.

7. The lithium-nickel-manganese-based composite oxide material according to any one of claims 1 to 6, wherein a specific surface area of the lithium-nickel-manganese-based composite oxide material is less than 1 $m^2$/g, or optionally, ranges from 0.1 $m^2$/g to 0.9 $m^2$/g.

8. The lithium-nickel-manganese-based composite oxide material according to any one of claims 1 to 7, wherein a tap density of the lithium-nickel-manganese-based composite oxide material is greater than or equal to 1.9 g/$cm^3$, or optionally, ranges from 1.9 $m^2$/g to 3.0 $m^2$/g.

9. The lithium-nickel-manganese-based composite oxide material according to any one of claims 1 to 8, wherein the lithium-nickel-manganese-based composite oxide material comprises lithium-nickel-manganese-based composite oxide particles whose surfaces are at least partially provided with a coating layer;

optionally, a material of the coating layer comprises at least one of aluminum oxide, titanium oxide, zirconium oxide, boron oxide, rare-earth oxide, lithium salt, phosphate, borate, and fluoride; optionally, the coating layer comprises a lithium fast-ion conductor layer; and optionally, the coating layer has a multi-layer structure, and the coating layer comprises the lithium fast-ion conductor layer on an inner side and an aluminum oxide layer on an outer side.

10. The lithium-nickel-manganese-based composite oxide material according to claim 9, having one or more of the following characteristics:

(1) the lithium fast-ion conductor is selected from oxide-based, phosphate-based, borate-based, sulfide-based, and LiPON-based inorganic materials with lithium ion conductivity;
(2) the lithium fast-ion conductor comprises one or more of the following elements: phosphorus, titanium, zirconium, boron, and lithium; and
(3) the lithium fast-ion conductor is selected from $Li_2BO_3$, $Li_3PO_4$, or a combination thereof.

11. The lithium-nickel-manganese-based composite oxide material according to any one of claims 1 to 10, wherein a general formula of the lithium-nickel-manganese-based composite oxide material is Formula I: L

$$i_aNi_{0.5-x}Mn_{1.5-y}M_{x+y}O_{4-z}X_z \qquad \text{Formula I}$$

wherein in Formula I, an element M is selected from Ti, Zr, W, Nb, Al, Mg, P, Mo, V, Cr, Zn, or a combination thereof;
in Formula I, an element X is selected from F, Cl, I, or a combination thereof;
in Formula I, $0.9 \leq a \leq 1.1$, $-0.2 \leq x < 0.2$, $-0.2 \leq y \leq 0.3$, and $0 \leq z \leq 1$;
optionally, the element M is selected from Mg, Ti, or a combination thereof; and
optionally, the element X is F.

12. A method for preparing lithium-nickel-manganese-based material composite oxide, comprising:

providing a precursor composition, wherein the precursor comprises a lithium source, a nickel source, and a manganese source; and
sintering the precursor composition to obtain the lithium-nickel-manganese-based composite oxide material, wherein
a K value of a lithium-nickel-manganese-based composite oxide material ranges from 1 to 2, and the K value is calculated through the following formula:

$$K = D_v50/d_v50$$

wherein $d_v50$ is a volume median crystallite diameter of crystal particles of the lithium-nickel-manganese-based composite oxide material; and
$D_v50$ is a volume median particle diameter of the lithium-nickel-manganese-based composite oxide material.

13. The method according to claim 12, wherein a general formula of the lithium-nickel-manganese-based composite oxide material is Formula I:

$$Li_aNi_{0.5-x}Mn_{1.5-y}M_{x+y}O_{4-z}X_z \qquad \text{Formula I}$$

wherein in Formula I, an element M is selected from Ti, Zr, W, Nb, Al, Mg, P, Mo, V, Cr, Zn, or a combination thereof;
in Formula I, an element X is selected from F, Cl, I, or a combination thereof; and
in Formula I, $0.9 \leq a \leq 1.1$, $-0.2 \leq x \leq 0.2$ (for example, $0 \leq x \leq 0.2$), $-0.2 \leq y \leq 0.3$ (for example, $0 \leq y \leq 0.3$), and $0 \leq z \leq 1$.

14. The method according to any one of claim 12 or 13, satisfying one or more of the following:

(i) a ratio of a volume median particle diameter of the nickel source to a volume median particle diameter of the lithium-nickel-manganese-based composite oxide material ranges from 0.4 to 1;
(ii) a ratio of a volume median particle diameter of the manganese source to a volume median particle diameter of the lithium-nickel-manganese-based composite oxide material ranges from 0.4 to 1; and
(iii) a volume median particle diameter of the lithium source ranges from 1 $\mu$m to 20 $\mu$m.

15. The method according to any one of claims 12 to 14, wherein the sintering comprises a first heat treatment stage; and
a peak temperature at the first heat treatment stage ranges from 950°C to 1200°C, and a holding time of the peak temperature at the first heat treatment stage ranges from 5 hours to 30 hours.

16. The method according to claim 15, wherein a heating rate to the peak temperature during the first heat treatment is less than or equal to 5°C/min, or optionally, ranges from 0.5°C/min to 3°C/min.

17. The method according to any one of claims 12 to 16, wherein the sintering further comprises a second heat treatment stage after the first heat treatment stage; and
a peak temperature at the second heat treatment stage ranges from 550°C to 680°C, and a time at the second heat treatment stage ranges from 5 hours to 50 hours.

**18.** The method according to any one of claims 12 to 17, further comprising subjecting the precursor composition to ball milling before the sintering, wherein
optionally, a ball milling time is longer than 2 hours, for example, optionally, ranges from 2 hours to 6 hours.

**19.** A secondary battery, comprising a positive electrode plate, wherein the positive electrode plate comprises a positive electrode active material, and the positive electrode active material comprises the lithium-nickel-manganese-based composite oxide material according to any one of claims 1 to 11 or the lithium-nickel-manganese-based composite oxide material prepared in the method according to any one of claims 12 to 18.

**20.** An electric apparatus, comprising the secondary battery according to claim 19.

FIG. 1

FIG. 2

FIG. 3

FIG. 4

FIG. 5

FIG. 6

FIG. 7

**5**

FIG. 8

<u>5</u>

53

52
52

51

FIG. 9

FIG. 10

# INTERNATIONAL SEARCH REPORT

| International application No. |
| --- |
| **PCT/CN2021/126698** |

**A. CLASSIFICATION OF SUBJECT MATTER**

H01M 4/505(2010.01)i; H01M 4/525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 锂, 锰, 镍, 晶体, 晶粒, 颗粒, 粒径, 粒度, D50, 均匀, 均一, batter+, cell?, lithium, Li, manganese, Mn, nickel, Ni, crystal+, particle, size, uniform

**C. DOCUMENTS CONSIDERED TO BE RELEVANT**

| Category* | Citation of document, with indication, where appropriate, of the relevant passages | Relevant to claim No. |
| --- | --- | --- |
| X | CN 105226270 A (UNIVERSITY OF SCIENCE AND TECHNOLOGY BEIJING) 06 January 2016 (2016-01-06) <br> description, paragraphs 2 and 19-26, and figure 5 | 1-20 |
| X | CN 113178566 A (NINGBO RONBAY NEW ENERGY TECHNOLOGY CO., LTD.) 27 July 2021 (2021-07-27) <br> description, paragraphs 2-62, and figures 3 and 5 | 1-20 |
| X | CN 110304665 A (LANZHOU UNIVERSITY OF TECHNOLOGY) 08 October 2019 (2019-10-08) <br> description, paragraphs 2 and 10-17, and figures 1-3 | 1-20 |
| A | JP 2013082581 A (TOYOTA INDUSTRIES CORP.) 09 May 2013 (2013-05-09) <br> entire document | 1-20 |
| A | CN 105428628 A (ANHUI UNIVERSITY OF TECHNOLOGY) 23 March 2016 (2016-03-23) <br> entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 July 2022** | **27 July 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/126698**

| Patent document cited in search report | | | Publication date (day/month/year) | Patent family member(s) | Publication date (day/month/year) |
|---|---|---|---|---|---|
| CN | 105226270 | A | 06 January 2016 | None | |
| CN | 113178566 | A | 27 July 2021 | None | |
| CN | 110304665 | A | 08 October 2019 | None | |
| JP | 2013082581 | A | 09 May 2013 | None | |
| CN | 105428628 | A | 23 March 2016 | None | |

Form PCT/ISA/210 (patent family annex) (January 2015)